# FASCICULE DE BREVET EUROPEEN

(11) **EP 2 047 348 B1**
(45) Date de publication et mention de la délivrance du brevet: **30.11.2011**
(21) Numéro de dépôt: 07823391.3
(22) Date de dépôt: 02.08.2007
(51) Int. Cl.: G05D 23/13

(54) **CARTOUCHE THERMOSTATIQUE A COMMANDES DE TEMPÉRATURE ET DE DÉBIT CONCENTRIQUES, ET ROBINET MITIGEUR ÉQUIPÉ D'UNE TELLE CARTOUCHE**
THERMOSTATISCHE KARTUSCHE MIT KONZENTRISCHER TEMPERATUR- UND FLUSSSTEUERUNG SOWIE MIT EINER SOLCHEN KARTUSCHE AUSGESTATTETER MISCHHAHN
THERMOSTATIC CARTRIDGE WITH CONCENTRIC TEMPERATURE ET FLOW CONTROLS AND MIXER TAP PROVIDED WITH SUCH A CARTRIDGE

(30) Priorité: 03.08.2006 FR 0607118
(43) Date de publication de la demande: 15.04.2009
(73) Titulaire: Vernet, 91340 Ollainville (FR)
(72) Inventeur: MACE, Christian, F-91680 Bruyeres Le Chatel (FR)
(74) Mandataire: Myon, Gérard Jean-Pierre
(86) Numéro de dépôt international: PCT/FR2007/001338
(87) Numéro de publication internationale: WO 2008/017760

(56) Documents cités:
- EP-A1- 1 241 385
- WO-A-00/68754
- US-A- 6 089 462

## Description

La présente invention concerne une cartouche thermostatique pour robinet mitigeur. Elle vise plus spécifiquement les cartouches thermostatiques à commandes de température et de débit concentriques, c'est-à-dire les cartouches permettant, d'une part, par un premier élément de commande, de régler la température d'un fluide sortant résultant du mélange d'un fluide entrant chaud et d'un fluide entrant froid, et, d'autre part, par un second élément de commande distinct du premier élément, de régler le débit du mélange sortant, ces deux éléments de commande étant assemblés de manière concentrique pour permettre leur manipulation par des rotations respectives sur eux-mêmes.

En pratique, la régulation de la température du mélange sortant est assurée par un élément thermostatique, généralement à cire, tandis que la commande du débit du mélange sortant est fréquemment assurée par la coopération de deux disques en céramique accolés par une de leurs faces de manière mobile.

On trouve actuellement sur le marché des cartouches thermostatiques de ce genre, que l'on peut qualifier de « cartouches intégrées », dans le sens où leurs composants sont conçus et assemblés spécifiquement en vue d'assurer la double régulation de température et de débit. Un exemple d'une telle cartouche intégrée est fourni par EP-A-1-235 129.

Par ailleurs, on connaît, par exemple par EP-A-0 936 524, un ensemble thermostatique ayant uniquement la fonction de régler et de stabiliser la température d'un mélange sortant, sans pouvoir commander le débit de ce mélange. Ce genre d'ensemble thermostatique peut être rapporté, d'un seul bloc, dans des robinets mitigeurs à commandes de température et de débit concentriques, moyennant l'utilisation d'un ensemble adaptateur, comme par exemple proposé dans US-B-6,325,295. L'intérêt d'utiliser un ensemble thermostatique préexistant, plutôt que de concevoir une cartouche intégrée du type de celle évoquée plus haut, est de limiter le coût de développement de la cartouche, puisque cette dernière repose sur un ensemble préexistant fiable, tout en limitant le coût unitaire de cette cartouche, puisque les coûts de fabrication de l'ensemble préexistant sont supportés par plusieurs applications.

En pratique, l'ensemble adaptateur dans lequel est agencé et maintenu l'ensemble thermostatique préexistant, est nécessaire pour, d'une part, conduire les fluides chaud et froid à mélanger jusqu'à l'ensemble thermostatique et, d'autre part, assurer la liaison mécanique entre l'élément de commande de débit, extérieur à l'enveloppe principale de la cartouche, et les disques en céramique. A cet effet, US-B-6,325,295 propose un ensemble adaptateur comportant deux manchons concentriques emboîtés l'un dans l'autre, entre lesquels circulent les fluides entrant chaud et froid. De nombreux joints d'étanchéité sont nécessaires pour isoler les circulations de ces fluides. L'ensemble adaptateur comporte ainsi un grand nombre de pièces élémentaires, qu'il est complexe et coûteux d'assembler les unes aux autres, tout en courant des risques de fuite importants eu égard aux sollicitations mécaniques et thermiques auxquelles cet ensemble adaptateur est soumis de manière répétée.

US-A-6,089,462 se propose de fournir une cartouche thermostatique à structure simplifiée, mais qui, comme évoqué plus haut, correspond à une cartouche intégrée, dans le sens où au moins une partie de ses composants ne forme pas un ensemble préexistant que l'on peut agencer dans plusieurs formes d'application. Cette cartouche permet de réguler à la fois la température et le débit d'un mélange sortant par l'intermédiaire d'un disque de commande en céramique : ce disque est entraîné en rotation sur lui-même, par rapport à des composants adjacents fixes, par une tige venue de matière avec un manchon rotatif d'actionnement, dans le prolongement d'une partie de la périphérie de ce manchon. Les fluides entrants chaud et froid circulent de ce disque de commande jusqu'à un tiroir de régulation, dans des canaux respectifs délimités par un corps tubulaire fixe, distinct du manchon d'actionnement précité et réalisé soit en métal, soit en céramique. De nombreux joints sont prévus pour étancher la circulation des fluides, tout en tenant compte des contraintes d'assemblage mobile entre le corps fixe et le manchon rotatif précités.

Le but de la présente invention est de proposer une cartouche thermostatique à commandes de température et de débit concentriques, qui, tout en incluant un ensemble thermostatique de régulation de température avantageusement préexistant, soit économique et limite les risques de fuite.

A cet effet, l'invention a pour objet une cartouche thermostatique à commandes de température et de débit concentriques, telle que définie à la revendication 1.

La cartouche thermostatique selon l'invention intègre ainsi un manchon d'une seule pièce, ce qui permet, d'une part, de limiter le coût de la cartouche, par limitation du coût des composants et du coût d'assemblage, et, d'autre part, de limiter les risques de fuite, notamment sur toute la longueur du manchon puisque ce dernier délimite à lui seul les canaux de circulation des fluides chaud et froid. En particulier, par rapport à un ensemble adaptateur à deux manchons à emboîter l'un dans l'autre de manière étanche, comme proposé dans US-A-6,325,195, ou bien par rapport à un manchon d'actionnement rotatif assemblé de manière mobile à un corps fixe de circulation des fluides jusqu'à un ensemble thermostatique de régulation, comme proposé dans US-A-6,089,462, le manchon de la cartouche selon l'invention nécessite moins de joints d'étanchéité et ne requiert aucun assemblage intermédiaire avant de rapporter à l'intérieur l'ensemble thermostatique, avantageusement préexistant. La structure monobloc de ce manchon garantit en outre une fiabilité mécanique élevée, pérennisant ainsi la liaison mécanique entre l'ensemble de commande de débit et un élément de commande extérieur, tel qu'une manette.

D'autres caractéristiques de cette cartouche thermostatique, prises isolément ou suivant toutes les combinaison techniquement possibles, sont énoncées aux revendications dépendantes 2 à 10.

L'invention a également pour objet un robinet mitigeur, équipé d'une cartouche thermostatique telle que définie ci-dessus.

L'invention sera mieux comprise à la lecture de la description qui va suivre, donnée uniquement à titre d'exemple et faite en se référant aux dessins sur lesquels :
- la figure 1 est une coupe longitudinale d'une cartouche thermostatique conforme à l'invention ;
- la figure 2 est une vue éclatée en perspective de la cartouche de la figure 1 ;
- la figure 3 est une coupe transversale de la cartouche, prise selon la ligne III-III de la figure 1 ;
- la figure 4 est une coupe analogue à la figure 1, sur laquelle un manchon de la cartouche est représenté seul ;
- la figure 5 est une coupe selon la ligne V-V de la figure 4 ; et
- les figures 6 et 7 sont respectivement des vues à plus grande échelle de détails cerclés VI et VII à la figure 1.

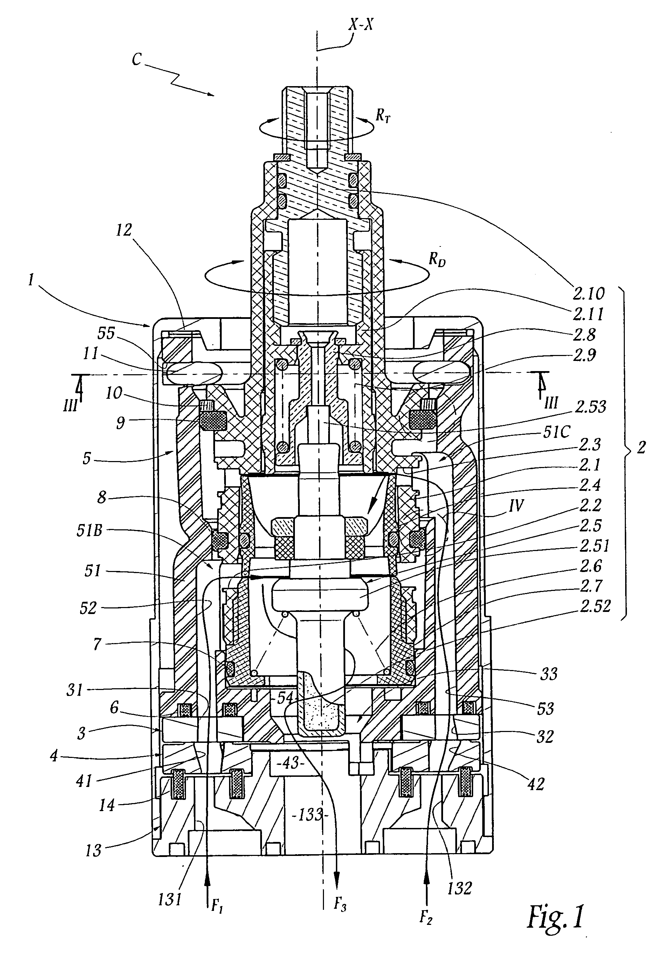

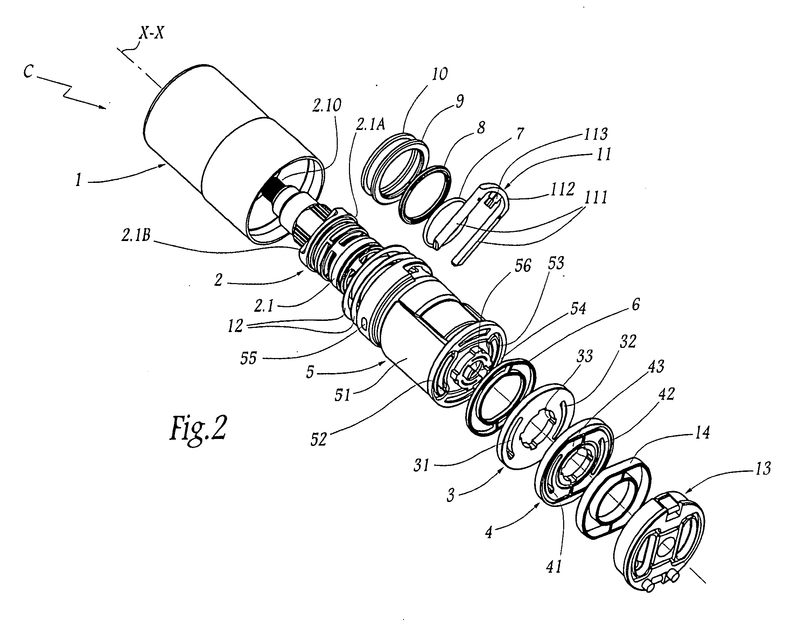

Sur les figures 1 et 2 est représentée une cartouche thermostatique C destinée à équiper un robinet mitigeur d'une installation sanitaire, telle qu'un évier, une baignoire, une douche, etc.. Cette cartouche est prévue pour être rapportée à l'intérieur d'un corps de robinetterie, pour permettre de mélanger un fluide entrant chaud F₁, en pratique de l'eau chaude, et un fluide entrant froid F₂, en pratique de l'eau froide, afin de délivrer un mélange de fluide sortant F₃, en pratique de l'eau mitigée, présentant une température comprise entre la température de l'eau chaude et la température de l'eau froide.

La cartouche C est adaptée pour commandeur, de manière distincte, la température et le débit de l'eau mitigée F₃, comme expliqué progressivement ci-après.

La cartouche C comporte essentiellement :
- une enveloppe externe principale 1,
- un ensemble thermostatique 2 détaillé ci-après, adapté pour être alimenté par l'eau chaude F₁ et par l'eau froide F₂ et pour réguler la température de l'eau mitigée F₃,
- une paire de disques en céramique 3 et 4 de commande des débits d'eau chaude et d'eau froide envoyées vers l'ensemble thermostatique 2, ces deux disques étant accolés par l'une de leurs faces de manière mobile l'un par rapport à l'autre, et
- un manchon allongé 5 de circulation de l'eau chaude et de l'eau froide depuis les disques 3 et 4 jusqu'à l'ensemble thermostatique 2, comme détaillé plus loin.

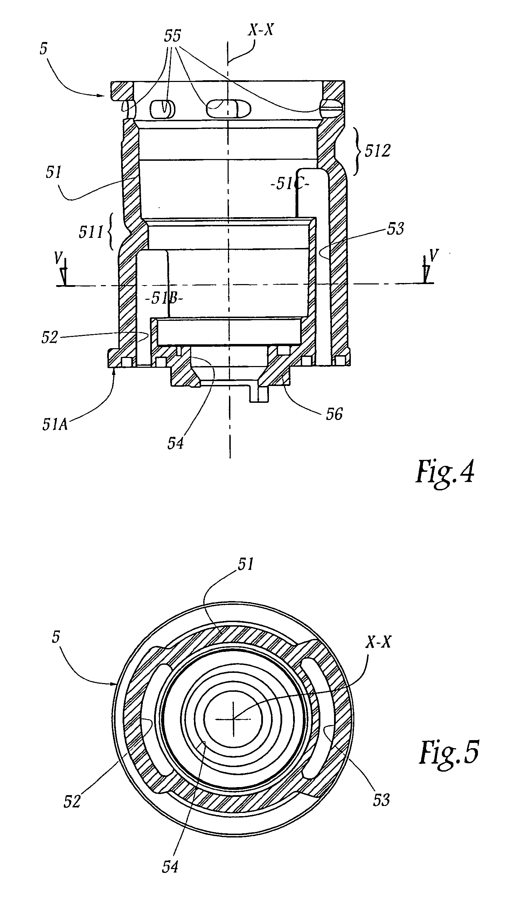

Par commodité, la suite de la description est orientée par rapport à la direction longitudinale du manchon 5, de sorte que les termes « supérieur » et « haut » désignent une direction dirigée vers la partie haute des figures 1 et 4, tandis que les termes « inférieur » et « bas » désignent une direction de sens opposé.

L'ensemble thermostatique 2 présente une structure et un fonctionnement analogues à ceux de l'ensemble thermostatique décrit dans EP-A-0 936 524. Par commodité, cet ensemble 2 ne sera décrit ci-après que succinctement, étant entendu que le lecteur pourra se reporter au document EP-A-0 936 524 pour connaître des détails et des variantes de réalisation de cet ensemble.

Ainsi, l'ensemble thermostatique 2 est adapté pour, indépendamment des débits de l'eau chaude F₁ et de l'eau froide F₂ l'alimentant, réguler la température du mélange de ces fluides, sortant de l'ensemble et constituant l'eau mitigée F₃. A cet effet, l'ensemble 2 comporte un corps externe creux allongé 2.1 présentant une forme extérieure générale sensiblement de révolution, autour d'un axe longitudinal central X-X. La paroi du corps 2.1 est traversée radialement de part en part par au moins deux lumières latérales 2.2 et 2.3, par respectivement lesquelles l'eau chaude F₁ et l'eau froide F₂ passent de l'extérieur du corps à son volume interne, en vue de leur mélange. Ces lumières sont décalées suivant l'axe X-X, de sorte qu'un tiroir de régulation 2.4 est axialement agencé entre ces lumières. Ce tiroir est monté axialement coulissant à l'intérieur du corps 2.1, de manière à former un obturateur des lumières 2.2 et 2.3 en fonction de sa position axiale, étant remarqué que l'obturation progressive d'une des lumières entraîne l'ouverture progressive de l'autre, et inversement. La position axiale du tiroir 2.4 est commandée par un élément thermostatique 2.5 dont le corps principal 2.51 est lié en mouvement au tiroir. Le corps 2.51 de l'élément thermostatique 2.5 est partiellement remplit d'une matière thermodilatable 2.52 sensible à la température de l'eau mitigée F₃ dans laquelle baigne la partie du corps 2.51 contenant cette matière. Sous l'effet de la dilatation de la matière 2.52, un piston 2.53 de l'élément thermostatique 2.5 se déplace en translation suivant l'axe X-X par rapport au corps 2.51. En pratique, en dehors des opérations de réglage expliquées plus loin, la position axiale du piston 2.53 est fixe par rapport au corps externe 2.1, de sorte que toute modification de la température de l'eau mitigée F₃ entraîne le déplacement relatif du corps 2.51 de l'élément thermostatique et, par là, la translation du tiroir 2.4 par rapport au corps 2.1. L'élément thermostatique 2.5 est associé à un ressort de rappel 2.6, interposé entre le corps 2.51 et un appui 2.7 vissé et immobilisé à l'extrémité axiale inférieure du corps 2.1. L'extrémité supérieure du piston 2.53 prend appui contre un embout de surcourse 2.8 associé à un ressort de surcourse 2.9. Pour permettre le réglage de la position axiale de l'extrémité supérieure du piston par rapport au corps 2.1, l'ensemble 2 comporte, d'une part, une vis de réglage 2.10, centrée sur l'axe X-X et dont l'extrémité supérieure s'étend à l'extérieur du corps 2.1 et, d'autre part, un écrou de réglage 2.11.

En service, lorsque l'eau chaude F₁ alimente la lumière 2.2 et que l'eau froide F₂ alimente la lumière 2.3, l'eau mitigée F₃ s'écoule en aval du tiroir 2.4, le long de la partie thermosensible du corps 2.51 de l'élément thermostatique 2.5. Si la température de l'eau mitigée augmente, l'élément thermostatique se dilate et le tiroir 2.4, à qui il est lié en mouvement, obture progressivement la lumière 2.2 et ouvre progressivement la lumière 2.3. Il en résulte une diminution de la température de l'eau mitigée, par modification du rapport des débits d'eau chaude et d'eau froide admis à l'intérieur du corps 2.1. Un fonctionnement inverse se déroule lorsque la température de l'eau mitigée diminue. Ces corrections de la température de l'eau mitigée par l'élément thermostatique s'équilibrent jusqu'à la stabilisation de cette température à une valeur qui dépend de l'altitude axiale du piston 2.53. Le choix par l'utilisateur de la température de l'eau mélangée F₃, c'est-à-dire le réglage de cette température, est obtenu par rotation R_{T} de la vis 2.10 autour de l'axe X-X, qui, par un filetage, imprime un mouvement de translation axiale à l'écrou 2.11. Tant que le tiroir de régulation 2.4 n'obture pas totalement la lumière d'eau chaude 2.2, c'est-à-dire tant que ce tiroir n'est pas en appui étanche contre l'appui vissé 2.7, l'écrou 2.11 entraîne alors de manière correspondante l'embout de surcourse 2.8 contre lequel le piston 2.53 de l'élément thermostatique 2.5 est plaqué en appui sous l'action du ressort 2.6, modifiant ainsi l'altitude du piston.

Par ailleurs, s'il survient une coupure d'eau froide, l'élément thermostatique 2.5 est sensibilisé uniquement par l'eau chaude : le piston 2.53 se déploie alors de manière importante par rapport au corps 2.51, de sorte que le tiroir de régulation 2.4 se translate jusqu'à arriver en appui étanche contre l'appui vissé 2.7, puis, le cas échéant, l'embout de surcourse 2.8 comprime le ressort de surcourse 2.9. Il en résulte une fermeture automatique de la lumière d'eau chaude 2.2, évitant ainsi tout risque de brûlures. Autrement dit, l'ensemble thermostatique 2 intègre une fonction de sécurité anti-brûlures.

On comprend de ce qui précède et des détails de réalisation donnés dans EP-A-0 936 524 que l'ensemble thermostatique 2 régule la température de l'eau mitigée F₃ à lui seul, c'est-à-dire indépendamment des autres composants de la cartouche C. En pratique, cet ensemble thermostatique 2 est avantageusement un ensemble préexistant, que l'on assemble, entre autres, à l'enveloppe externe 1, aux disques de commande 3 et 4 et au manchon 5 en vue de disposer de la cartouche thermostatique C, comme expliqué plus loin.

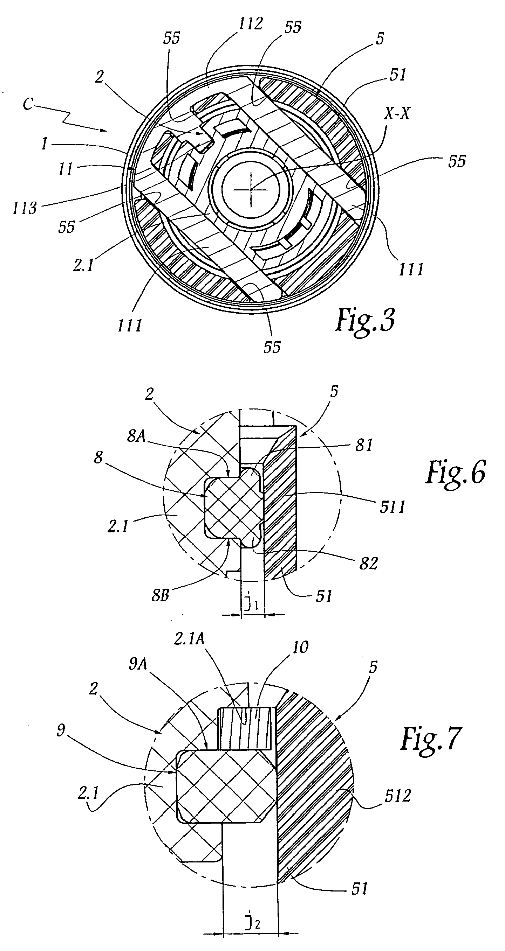

Comme représenté plus en détail sur les figures 3 à 5, le manchon 5 présente une forme globalement tubulaire, sensiblement centrée sur l'axe X-X. La paroi latérale 51 de ce manchon, réalisée d'une seule pièce, délimite, dans sa partie basse, trois canaux de circulation de fluide, comme bien visible à la figure 5. Ainsi, la paroi 51 délimite, dans son épaisseur, un premier canal 52 s'étendant, suivant la direction longitudinale du manchon, depuis la face d'extrémité axiale inférieure 51A de la paroi 51 jusqu'à une zone 51B de débouché radial dans le volume interne du manchon, comme représenté dans la partie gauche de la figure 4. Suivant la périphérie du manchon, ce premier canal 52 s'étend sur environ le quart du manchon, à plus ou moins 15%.

De manière diamétralement opposée au premier canal 52, la paroi 51 délimite, dans son épaisseur, un second canal 53 s'étendant, suivant la direction longitudinale du manchon, depuis la face d'extrémité 51A jusqu'à une zone 51C de débouché radial dans le volume interne du manchon, comme représenté dans la partie droite de la figure 4. Cette zone de débouché 51C est décalée axialement par rapport à la zone de débouché 51 B du canal 52, en étant séparé par une partie axiale correspondante 511 de la paroi 51, qui forme un épaulement interne à l'aplomb de la zone 51 B. Suivant la périphérie du manchon 5, le deuxième canal 53 s'étend approximativement sur le quart du manchon, à plus ou moins 15%.

En outre, la paroi 51 délimite intérieurement, de manière circonférentielle, un troisième canal 54 globalement centré sur l'axe X-X. Ce canal 54 relie axialement la face inférieure 51 A et le volume interne du manchon, en débouchant dans ce dernier au niveau axial de la zone de débouché 51 B du canal 52.

Dans sa partie d'extrémité supérieure, la paroi latérale 51 du manchon 5 est munie de plusieurs orifices 55 traversant radialement de part en part cette paroi. Ces orifices sont disposés globalement dans un même plan sensiblement perpendiculaire à l'axe X-X, situé axialement au-dessus de la zone de débouché 51C du deuxième canal 53, en étant séparé par une partie axiale correspondante 512 de la paroi 51, qui forme un épaulement interne à l'aplomb de la zone de débouché 51C. La disposition relative des orifices 55 ainsi que leur fonction seront détaillées par la suite.

A l'état assemblé de la cartouche C, la face d'extrémité inférieure 51A du manchon 5 est accolée, de manière centrée sur l'axe X-X, contre la face supérieure du disque supérieure 3 en liant ces deux pièces l'une avec l'autre en rotation autour de l'axe X-X. Comme représenté sur les figures 1 et 2, le disque 3 délimite trois passages de fluide qui traversent de part en part le disque suivant son épaisseur, à savoir un passage d'eau chaude 31, un passage d'eau froide 32 et un passage d'eau mitigée 33. Les extrémités axiales inférieures des canaux 52, 53 et 54 du manchon débouchent directement, suivant des directions respectives sensiblement parallèles à l'axe X-X, dans respectivement ces passages 31, 32 et 33, étant remarqué que la paroi délimitant le passage 33 est prévue complémentaire d'une bride crénelée 56 entourant le débouché du canal central 54 (figure 2) aux fins de la liaison en rotation entre le manchon et le disque 3. Pour assurer l'étanchéité des circulations de l'eau chaude, de l'eau froide et de l'eau mitigée vers l'extérieur et les unes vis-à-vis des autres, un joint de compression 6 est interposé axialement entre le manchon et le disque 3. Ce joint de forme se loge avantageusement dans une empreinte correspondante creusée dans la face d'extrémité 51A du manchon.

Egalement à l'état assemblé de la cartouche C, l'ensemble thermostatique 2 est reçu de manière étanche à l'intérieur du manchon 5. Plus précisément, comme représenté à la figure 1, l'appui vissé 2.7 est logé dans la partie supérieure du canal central 54, épaulée de façon sensiblement complémentaire à cet appui et avec interposition d'un joint inférieur 7, tel qu'un joint torique classique, tandis que la partie inférieure du corps externe 2.1 est logée dans le reste du volume interne du manchon, avec interposition d'un joint intermédiaire 8 et d'un joint supérieur 9. Dans cette configuration assemblée, la lumière 2.1 se trouve disposée dans la zone de débouché 51 B du canal 52, tandis que la lumière 2.3 se trouve disposée dans la zone de débouché 51C du canal 53. On comprend ainsi que les canaux 52 et 53 permettent, dans l'épaisseur de la paroi 51 du manchon et donc sans risque de fuite le long de ces canaux, les circulations respectives de l'eau chaude F₁ et de l'eau froide F₂ depuis le disque 3 jusqu'à respectivement les lumières 2.2 et 2.3.

Dans le même temps, l'eau mitigée F₃ sortant de l'ensemble thermostatique 2 alimente le canal central 54 dans lequel s'étend l'extrémité inférieure du corps 2.51 de l'élément thermostatique 2.5.

Le joint 7 assure ainsi l'étanchéité de la circulation d'eau chaude F₁ vis-à-vis de la circulation d'eau mitigée F₃, entre l'appui 2.7 et le manchon 5.

Le joint 8 assure, quant à lui, l'étanchéité de la circulation d'eau chaude F₁ vis-à-vis de l'eau froide F₂, entre le corps externe 2.1 et la partie de paroi 511. En pratique, ce joint 8 est un joint spécial, dans le sens où, comme représenté plus en détail à la figure 6, il présente une section transversale sensiblement rectangulaire, avec des faces inférieure 8A et supérieure 8B de chacune desquelles s'étend en saillie respectivement vers le bas et vers le haut un bourrelet périphérique saillant 81, 82. Le joint 8 est logé dans une gorge périphérique associée, creusée dans la face extérieure du corps 2.1, de sorte que les bourrelets 81 et 82 occupent le jeu radial j₁ séparant le corps 2.1 et la partie de paroi 511. La forme spéciale du joint 8 confère à ce dernier une excellente tenue à la pression, en limitant les risques d'extrusion du joint : comme ce joint est soumis à la différence de pressions entre l'eau chaude et l'eau froide, sa défaillance provoquerait notamment une fuite d'eau chaude en cas de coupure d'eau froide, avec des risques importants de brûlures. Cette tenue à la pression est fournie même pour une valeur du jeu j₁ supérieure à la valeur maximale du jeu que pourrait supporter un joint torique classique.

Le joint 9 assure, quant à lui, l'étanchéité de l'eau froide vis-à-vis de l'extérieur, entre le corps 2.1 et la partie de paroi 512. En pratique, le joint 9 est un joint spécial, dans le sens où, comme représenté plus en détail à la figure 7, d'une part, il présente une section transversale sensiblement rectangulaire s'ajustant dans une gorge périphérique correspondante creusée dans la face extérieure du corps 2.1 et, d'autre part, il est associé à une rondelle de maintien axial 10, coincée axialement entre la face supérieure 9A du joint 9 et un épaulement correspondant 2.1A du corps 2.1. Le diamètre extérieur de cette rondelle 10 est sensiblement égal au diamètre intérieur de la partie de paroi 512, de sorte que la rondelle centre l'ensemble thermostatique 2 dans le manchon 5, tout en occupant le jeu radial j₂ séparant le corps externe 2.1 et la partie de paroi 512 juste au-dessus de la face 9A du joint 9. De la sorte, la rondelle 10 évite l'extrusion du joint 9 dans le jeu j₂ : une telle défaillance du joint provoquerait une fuite d'eau froide vers l'extérieur, avec un risque d'inondation correspondant. L'association du joint 9 et de la rondelle 10 permet ainsi d'étancher efficacement le jeu j₂, même pour des valeurs de ce jeu supérieures à la valeur maximale du jeu que pourrait accommoder un joint torique classique.

A l'état assemblé de la cartouche C, le manchon 5 est lié mécaniquement au corps externe 2.1 de l'ensemble thermostatique 2, par l'intermédiaire d'une fourche rigide 11, bien visible aux figures 2 et 3. Cette fourche comprend deux bras parallèles 111 qui définissent un plan sensiblement perpendiculaire à l'axe X-X et qui sont reliés l'un à l'autre, à une de leurs extrémités, par une portion annulaire 112 sensiblement centrée sur l'axe X-X. Comme représenté sur la figure 3, chaque bras 111 est reçu dans deux des orifices 55 associés, tandis qu'un plot interne 113 solidaire de la portion 112 est reçu dans le cinquième orifice 55. L'écartement radial séparant les bras 111 est prévu ajusté sur deux méplats opposés 2.1B du corps 2.1. Ainsi, la fourche 11 permet, à elle seule, de retenir axialement l'ensemble thermostatique 2 dans le manchon 5, au moins vers le haut par butée axiale de la base des méplats 2.1 B contre la face inférieure des bras 111, et de lier en rotation autour de l'axe X-X le manchon et le corps externe 2.1, par accolement des méplats 2.1B contre les faces en regard des bras 111.

L'enveloppe externe 1, réalisée en métal ou en plastique, entoure extérieurement la totalité du manchon 5 et le maintient axialement par une bride d'extrémité supérieure, avec interposition d'une double rondelle de glissement 12, réalisée notamment en une matière plastique ayant un coefficient de frottement faible, par exemple en PTFE. Dans sa partie d'extrémité inférieure, l'enveloppe 1 est fixement assemblée à une embase 13, réalisée par exemple en plastique, permettant le raccordement de la cartouche C avec les entrées d'eau chaude et d'eau froide et la sortie d'eau mitigée d'un robinet, via respectivement un passage d'eau chaude 131, un passage d'eau froide 132 et un passage d'eau mitigée 133 qui traversent axialement l'embase de part en part. La face supérieure de l'embase est accolée, de manière centrée sur l'axe X-X, contre la face inférieure du disque inférieur 4, en liant ces deux pièces l'une avec l'autre en rotation autour de l'axe X-X. Le disque 4 délimite à la fois un passage d'eau chaude 41, un passage d'eau froide 42 et un passage d'eau mitigée 43, qui traversent axialement le disque de part en part et qui débouchent respectivement, du côté de l'embase, dans les passages 131, 132 et 133, étant remarqué que la paroi délimitant le passage 43 est prévue complémentaire d'une bride crénelée entourant le débouché du passage 133 (non visible à la figure 2) aux fins de la liaison en rotation entre l'embase et le disque 4. Un joint de compression 14 est axialement interposé entre l'embase 13 et le disque 4, ce joint assurant l'étanchéité des circulations d'eau chaude, d'eau froide et d'eau mitigée vers l'extérieur et les unes vis-à-vis des autres. Ce joint 14 est avantageusement logé dans une empreinte correspondante creusée dans la face supérieure de l'embase.

En service, l'eau chaude F₁ entre dans la cartouche C par le passage 131 de l'embase 13, traverse successivement le passage 41 du disque 4 et le passage 31 du disque 3, circule dans le canal 52 du manchon 5, traverse la lumière 2.2 et pénètre dans le tiroir 2.4. Dans le même temps, l'eau froide F₂ entre dans la cartouche par le passage 132 de l'embase 13, traverse successivement le passage 42 du disque 4 et le passage 32 du disque 3, circule dans le canal 53, traverse la lumière 2.3 puis se mélange avec l'eau chaude dans le tiroir 2.4. L'eau mitigée sort de ce tiroir en traversant le ressort de rappel 2.6, passe autour de la partie thermosensible de l'élément thermostatique 2.5 et traverse successivement le canal 54 du manchon 5, le passage 33 du disque 3, le passage 43 du disque 4 et le passage 133 de l'embase 13, pour finalement atteindre la sortie du robinet.

Le réglage du débit de l'eau mitigée F₃ est obtenu par une rotation R_{D} autour de l'axe X-X du corps 2.1, qui entraîne en rotation la fourche 11, qui elle-même entraîne en rotation le manchon 5, qui lui-même entraîne en rotation le disque 3 par rapport au disque fixe 4. La position angulaire du disque mobile 3 par rapport au disque fixe 4 définit la section de passage d'eau chaude résultant de la jonction des passages 31 et 41 d'une part, et la section de passage d'eau froide résultant de la jonction des passages 32 et 42 d'autre part. Les formes de ces passages sont conçues pour que les sections de circulation d'eau chaude et d'eau froide soient égales l'une à l'autre quelle que soit la position angulaire relative entre les deux disques, le réglage allant de la fermeture complète jusqu'à la pleine ouverture.

Pour fabriquer la cartouche C, on dispose, d'une part, de l'ensemble thermostatique 2 dans une configuration pré-assemblée telle que celle illustrée à la figure 2 et, d'autre part, des autres composants de la cartouche C, notamment de l'enveloppe 1, des disques 3 et 4 et du manchon 5. Avantageusement, ce manchon est obtenu par injection de matière plastique : pour réaliser dans l'épaisseur de la paroi 51 les canaux 52 et 53 qui débouchent dans le volume intérieur du manchon, sans déboucher sur l'extérieur de ce manchon, ces canaux viennent de broches de moulage qui se démoulent vers le bas, tandis qu'une broche centrale est utilisée conjointement pour mouler la face interne de la paroi 51, notamment au niveau du canal central 54 et des parties de paroi 511 et 512. L'utilisation de ces broches implique des écarts dimensionnels entre le diamètre intérieur maximal du canal 54, le diamètre intérieur de la partie de paroi 511 et le diamètre intérieur de la partie de paroi 512. Ces écarts dimensionnels sont à l'origine des jeux précités j₁ et j₂, étanchés par les joints spéciaux 8 et 9 à l'état assemblé de la cartouche C, comme expliqué plus haut.

Pour assembler les composants de la cartouche C, on rapporte l'ensemble thermostatique 2 à l'intérieur du manchon 5, en passant par l'extrémité supérieure de ce dernier. La fourche 11 peut ensuite être rapportée transversalement au manchon, de manière à lier ce dernier au corps externe 2.1 de l'ensemble 2. Parallèlement, les disques 3 et 4 et l'embase 13 sont rapportés à l'extrémité inférieure du manchon 5, puis l'enveloppe 1 est utilisée pour maintenir ces composants les uns par rapport aux autres.

Divers aménagements et variantes à la cartouche C décrite ci-dessus sont par ailleurs envisageables. A titre d'exemples :
- les dimensions périphériques des canaux 52 et 53 du manchon 5 ne sont pas limitées à un quart de ce manchon ; elles peuvent notamment atteindre sensiblement la moitié périphérique de ce manchon pour des cartouches à forts débits ; et/ou
- d'autres ensembles de commande que l'ensemble à disques 3 et 4 peuvent être utilisés dans la partie basse de la cartouche, du moment que ces ensembles permettent l'alimentation des canaux 52 et 53 en fluide chaud et en fluide froid, tout en étant actionnables par entraînement du manchon aux fins de la commande de débit.

## Revendications

1. Cartouche thermostatique (C) à commandes de température et de débit concentriques, comportant :
- un ensemble thermostatique (2) de régulation de la température d'un mélange sortant (F₃) de fluides entrants chaud (F₁) et froid (F₂), ledit ensemble thermostatique comprenant un corps externe (2.1) qui délimite des première (2.2) et seconde (2.3) lumières d'admission pour respectivement les fluides chaud et froid,
- un ensemble (3, 4) de commande des débits des fluides chaud et froid envoyés vers les première et seconde lumières, et
- un manchon d'actionnement (5), qui est adapté pour actionner par entraînement l'ensemble de commande et à l'intérieur duquel est reçue de manière étanche au moins une partie du corps externe de l'ensemble thermostatique,
**caractérisée en ce que** le manchon d'actionnement (5) est d'une seule pièce qui délimite un premier canal interne (52) de circulation du fluide chaud (F₁) depuis l'ensemble de commande (3, 4) jusqu'à la première lumière (2.2) et un second canal interne (53) de circulation du fluide froid (F₂) depuis l'ensemble de commande jusqu'à la seconde lumière (2.3).

2. Cartouche suivant la revendication 1, **caractérisée en ce que** le manchon d'actionnement (5) est réalisé en matière plastique injectée.

3. Cartouche suivant la revendication 1 ou 2, **caractérisée en ce que** les premier (52) et second (53) canaux s'étendent chacun sur environ un quart de la périphérie du manchon d'actionnement (5).

4. Cartouche suivant la revendication 1 ou 2, caractérisée en ce les premier et second canaux s'étendent chacun sur environ une moitié de la périphérie du manchon d'actionnement (5).

5. Cartouche suivant l'une quelconque des revendications précédentes, **caractérisée en ce qu'**elle comporte en outre une fourche (11) de liaison mécanique entre le corps externe (2.1) de l'ensemble thermostatique (2) et le manchon d'actionnement (5), adaptée, à la fois, pour retenir le corps externe dans le manchon d'actionnement suivant la direction longitudinale de ce dernier et pour lier le corps externe et le manchon en rotation autour d'un axe longitudinal central (X-X) du manchon d'actionnement.

6. Cartouche suivant la revendication 5, **caractérisée en ce que** la fourche (11) comporte au moins deux bras (111) qui s'étendent dans un plan sensiblement perpendiculaire à la direction longitudinale (X-X) du manchon d'actionnement (5), qui sont reçus dans des orifices associés (55) délimités par le manchon et qui coopèrent par complémentarité de formes avec des méplats (2.1B) délimités par le corps externe (2.1) de l'ensemble thermostatique (2).

7. Cartouche suivant l'une quelconque des revendications précédentes, **caractérisée en ce que**, au niveau de sa zone (51 B) de débouché dans le volume interne du manchon d'actionnement (5), le premier canal (52) est étanché par un premier joint (8) interposé transversalement entre le manchon d'actionnement et le corps externe (2.1) de l'ensemble thermostatique (2), ce premier joint présentant une section transversale sensiblement rectangulaire et étant muni, sur chacune de ses faces (8A, 8B) transversales à la direction longitudinale (X-X) du manchon, d'un bourrelet périphérique saillant (81, 82) qui occupe l'essentiel du jeu (j₁) entre le manchon d'actionnement et le corps externe.

8. Cartouche suivant l'une quelconque des revendications précédentes, **caractérisée en ce que**, au niveau de sa zone (51C) de débouché dans le volume interne du manchon d'actionnement, le second canal (53) est étanché par un second joint (9) interposé transversalement entre le manchon d'actionnement et le corps externe (2.1) de l'ensemble thermostatique (2), ce second joint présentant une section transversale sensiblement rectangulaire et étant associé à un élément de maintient (10) qui est rapporté contre une face (9A) du second joint transversale à la direction longitudinale (X-X) du manchon et qui occupe l'essentiel du jeu (j₂) entre le manchon d'actionnement et le corps externe.

9. Cartouche suivant l'une quelconque des revendications précédentes, **caractérisée en ce que** l'ensemble de commande comporte deux disques en céramique (3, 4) accolés par l'une de leurs faces de manière mobile, un premier (3) de ces disques étant lié en mouvement au manchon d'actionnement (5) aux fins de la commande des débits et délimitant des premier (31) et second (32) passages pour respectivement les fluides chaud (F₁) et froid (F₂), qui débouchent respectivement dans les premier (52) et second (53) canaux du manchon d'actionnement.

10. Cartouche suivant la revendication 9, **caractérisée en ce qu'**elle comporte en outre une enveloppe externe (1) à l'intérieur de laquelle le manchon d'actionnement (5) est à la fois retenu suivant sa direction longitudinale (X-X) et monté à rotation autour de son axe longitudinal central (X-X), avec interposition d'un moyen (12) de glissement suivant une direction périphérique au manchon d'actionnement, et **en ce que** le second (4) des deux disques en céramique est, directement ou indirectement, lié en mouvement à l'enveloppe externe (1).

11. Robinet mitigeur, **caractérisé en ce qu'**il est équipé d'une cartouche thermostatique (C) conforme à l'une quelconque des revendications précédentes.

## Claims

1. A thermostatic cartridge (C) with concentric temperature and flow rate controls, the cartridge comprising:
· a thermostatic assembly (2) for regulating the temperature of an outgoing mixture (F₃) of incoming hot and cold fluids (F₁ and F₂), said thermostatic assembly comprising an outer body (2.1) that defines first and second admission slots (2.2 and 2.3) respectively for the hot and cold fluids;
· control assembly (3, 4) for controlling the flow rates of the hot and cold fluids sent to the first and second slots; and
· an actuator sleeve (5), which is adapted to actuat by driving the control assembly, and in which is received in leaktight manner at least a portion of the outer body of the thermostatic assembly;
the cartridge being **characterized in that** the actuator sleeve (5) is a single part that defines both a first internal channel (52) for passing a flow of the hot fluid (F₁) from the control assembly (3, 4) to the first slot (2.2), and a second internal channel (53) for passing a flow of the cold fluid (F₂) from the control assembly to the second slot (2.3).

2. A cartridge according to claim 1, **characterized in that** the actuator sleeve (5) is made of an injection-molded plastics material.

3. A cartridge according to claim 1 or claim 2, **characterized in that** each of the first and second channels (52 and 53) occupies about one-fourth of the periphery of the actuator sleeve (5).

4. A cartridge according to claim 1 or claim 2, **characterized in that** each of the first and second channels extends over about one-half of the periphery of the actuator sleeve (5).

5. A cartridge according to any one of the preceding claims, **characterized in that** the cartridge further includes a fork (11) providing a mechanical connection between the outer body (2.1) of the thermostatic assembly (2) and the actuator sleeve (5), the fork being adapted both to retain the outer body inside the sleeve along the longitudinal direction thereof, and to constrain the outer body in rotation with the sleeve about a central longitudinal axis (X-X) of the actuator sleeve.

6. A cartridge according to claim 5, **characterized in that** the fork (11) has at least two arms (111) that lie in a plane substantially perpendicular to the longitudinal direction (X-X) of the actuator sleeve (5), that are received in associated orifices (55) defined by the sleeve, and that co-operate by means of complementary shapes with flats (2.1B) defined by the outer body (2.1) of the thermostatic assembly (2).

7. A cartridge according to any one of the preceding claims, **characterized in that**, at the zone (51B) where the first channel (52) opens out into the inside volume of the actuator sleeve (5), the first channel is sealed by a first gasket (8) interposed transversely between the actuator sleeve and the outer body (2.1) of the thermostatic assembly (2), said first gasket presenting a cross-section that is substantially rectangular and being provided, on each of its faces (8A, 8B) extending transversely relative to the longitudinal direction (X-X) of the sleeve, with a projecting peripheral bulge (81, 82) that essentially occupies the clearance (j₁) between the actuator sleeve and the outer body.

8. A cartridge according to any one of the preceding claims, **characterized in that**, at the zone (51C) where the second channel (53) opens out into the internal volume of the actuator sleeve, the second channel (53) is sealed by a second gasket (9) interposed transversely between the actuator sleeve and the outer body (2.1) of the thermostatic assembly (2), said second gasket presenting a cross-section that is substantially rectangular and being associated with a retention element (10) that is fitted against a face (9A) of the second gasket extending transversely relative to the longitudinal direction (X-X) of the sleeve and that essentially occupies the clearance (j₂) between the actuator sleeve and the outer body.

9. A cartridge according to any one of the preceding claims, **characterized in that** the control assembly comprises two ceramic disks (3, 4) each having one face in moving contact with one face of the other, a first one (3) of these disks being constrained to move with the actuator sleeve (5) in order to control the flow rates and defining first and second passages (31 and 32) respectively for the hot and cold fluids (F₁ and F₂), which passages open out respectively into the first and second channels (52 and 53) of the actuator sleeve.

10. A cartridge according to claim 9, **characterized in that** the cartridge further includes an outer case (1) within which the actuator sleeve (5) is both held in its longitudinal direction (X-X) and rotatable about the central longitudinal axis (X-X) thereof, with interposed means (12) for sliding in a peripheral direction of the actuator sleeve, and **in that** the second one (4) of the two ceramic disks is directly or indirectly constrained to move with the outer case (1).

11. A mixer tap, **characterized in that** the mixer tap is fitted with a thermostatic cartridge (C) in accordance with any one of the preceding claims.

## Patentansprüche

1. Thermostatische Kartusche (C) mit konzentrischer Temperatur- und Durchflusssteuerung, umfassend:
- eine thermostatische Anordnung (2) zur Einstellung der Temperatur einer austretenden Mischung (F₃) aus warm (F₁) und kalt (F₂) eintretenden Flüssigkeiten, wobei die thermostatische Anordnung einen Außenkörper (2.1) umfasst, der eine erste (2.2) und eine zweite (2.3) Öffnung zum Einlass von jeweils warmer und kalter Flüssigkeit umfasst,
- eine Anordnung (3, 4) zur Steuerung der Durchflüsse der warmen und der kalten Flüssigkeit, die zu der ersten und zweiter Öffnung geleitet werden, und
- eine Betätigungshülse (5), die angepasst ist, um durch Mitnahme die Steueranordnung zu betätigen, und in deren Inneren in abgedichteter Weise mindestens ein Teil des Außenkörpers der thermostatischen Anordnung aufgenommen ist,
**dadurch gekennzeichnet, dass** die Betätigungshülse (5) aus einem einzigen Stück besteht, das einen ersten Innenkanal (52) für die Zirkulation der warmen Flüssigkeit (F₁) von der Steueranordnung (3, 4) bis zur ersten Öffnung (2.2) und einen zweiten Innenkanal (5.3) für die Zirkulation der kalten Flüssigkeit (F₂) von der Steueranordnung bis zur zweiten Öffnung (2.3) begrenzt.

2. Kartusche nach Anspruch 1, **dadurch gekennzeichnet, dass** die Betätigungshülse (5) aus gespritztem Kunststoff hergestellt ist.

3. Kartusche nach Anspruch 1 oder 2, **dadurch gekennzeichnet, dass** der erste (52) und der zweite Kanal (53) sich jeweils über ein Viertel des Umfangs der Betätigungshülse (5) erstrecken.

4. Kartusche nach Anspruch 1 oder 2, **dadurch gekennzeichnet, dass** der erste (52) und der zweite Kanal (53) sich jeweils über die Hälfte des Umfangs der Betätigungshülse (5) erstrecken.

5. Kartusche nach einem beliebigen der vorhergehenden Ansprüche, **dadurch gekennzeichnet, dass** sie außerdem eine Gabel (11) zur mechanischen Verbindung des Außenkörpers (2.1) der thermostatischen Anordnung (2) mit der Betätigungshülse (5) umfasst, die sowohl zum Halten des Außenkörpers in der Betätigungshülse gemäß der Längsrichtung der letzteren als auch zum drehfesten Verbinden des Außenkörpers und der Hülse um eine Mittellängsachse (X-X) der Betätigungshülse ausgebildet ist.

6. Kartusche nach Anspruch 5, **dadurch gekennzeichnet, dass** die Gabel (11) mindestens zwei Arme (111) umfasst, die sich in einer im wesentlichen zur Längsrichtung (X-X) der Betätigungshülse (5) senkrechten Ebene erstrecken, wobei die Arme in zugeordneten, von der Hülse begrenzten Öffnungen (55) aufgenommen sind und durch Formenanpassung mit Abflachungen (2.1B) zusammenarbeiten, die von dem Außenkörper (2.1) der thermostatischen Anordnung (2) begrenzt sind.

7. Kartusche nach einem beliebigen der vorhergehenden Ansprüche, **dadurch gekennzeichnet, dass** der erste Kanal (5) an seiner Zone (51B) der Mündung in das Innenvolumen der Betätigungshülse (5) durch eine erste, quer zwischen der Betätigungshülse und dem Außenkörper (2.1) der thermostatischen Anordnung (2) angeordneten Dichtung (8) abgedichtet ist, wobei diese erste Dichtung einen im wesentlichen rechteckigen Querschnitt aufweist und auf jeder ihrer Flächen (8A, 8B) quer zur Längsrichtung (X-X) der Hülse mit einem hervorspringenden Umfangswulst (81, 82) ausgerüstet ist, der den wesentlichen Bereich des Spiels (j1) zwischen der Betätigungshülse und dem Außenkörper einnimmt.

8. Kartusche nach einem beliebigen der vorhergehenden Ansprüche, **dadurch gekennzeichnet, dass** der zweite Kanal (53) an seiner Zone (51C) der Mündung in das Innenvolumen der Betätigungshülse durch eine zweite, quer zwischen der Betätigungshülse und dem Außenkörper (2.1) der thermostatischen Anordnung (2) angeordneten Dichtung (9) abgedichtet ist, wobei diese zweite Dichtung einen im wesentlichen rechteckförmigen Querschnitt aufweist und einem Halteelement (10) zugeordnet ist, das gegen eine Fläche (9A) der zweiten Dichtung quer zur Längsrichtung (X-X) der Hülse anliegt und das den wesentlichen Bereich des Spiels (j₂) zwischen dem Betätigungselement und dem Außenkörper einnimmt.

9. Kartusche nach einem beliebigen der vorhergehenden Ansprüche, **dadurch gekennzeichnet, dass** die Steueranordnung zwei Scheiben (3, 4) aus Keramik aufweist, die mit einer ihrer Flächen in beweglicher Weise aneinander gefügt sind, wobei eine erste (3) der Scheiben bezügliche der Bewegung mit der Betätigungshülse (5) zum Zweck der Steuerung der Durchflüsse verbunden ist und einen ersten (31) und zweiten (32) Durchgang für jeweils die warme (F₁) und kalte (F₂) Flüssigkeit begrenzt, die jeweils in den ersten (52) und den zweiten (53) Kanal der Betätigungshülse münden.

10. Kartusche nach Anspruch 9, **dadurch gekennzeichnet, dass** sie außerdem eine Außenhülle (1) umfasst, in deren Inneren die Betätigungshülse (5) sowohl gemäß ihrer Längsrichtung (X-X) gehalten ist als auch rotierend um ihre Mittellängsachse (X-X) montiert ist mit Zwischenschaltung eines Gleitelementes (12) gemäß einer Umfangsrichtung zur Betätigungshülse und dass die zweite (4) der zwei Scheiben aus Keramik direkt oder indirekt in Bewegung mit der Außenhülle (1) verbunden ist.

11. Mischhahn, **dadurch gekennzeichnet, dass** er mit einer thermostatischen Kartusche (C) nach einem der vorhergehenden Ansprüche ausgerüstet ist.
